Europäisches Patentamt

European Patent Office

Office européen des brevets

(11) Publication number : **0 435 804 A2**

(12) **EUROPEAN PATENT APPLICATION**

(21) Application number : 90480185.9

(22) Date of filing : 13.11.90

(51) Int. Cl.⁵ : **G06F 15/40**

(30) Priority : 28.12.89 US 458037

(43) Date of publication of application :
03.07.91 Bulletin 91/27

(84) Designated Contracting States :
DE FR GB

(71) Applicant : International Business Machines
Corporation
Old Orchard Road
Armonk, N.Y. 10504 (US)

(72) Inventor : Wang, Diana Shu-Fan
13 Creekmere Drive
Trophy Club, Texas 76262 (US)
Inventor : Kastelic, Jason Francis
10801 Spicewood Club Drive
Austin, Texas 78750 (US)

(74) Representative : Tubiana, Max
Compagnie IBM France Département de
Propriété Intellectuelle
F-06610 La Gaude (FR)

(54) A method of expanding user access to a library of shared electronic documents.

㊼ This invention relates to a method of search-
ing a plurality of shared libraries which include
information formed into document relation-
ships such as folders and lists. A search criteria
is disclosed which is part of a SEARCH com-
mand used to locate information in a library.
The search criteria is composed of a scope and
filter portion. The scope portion provides for
specifying a library, specifying the depth of the
search when a folder or list is involved, and
identifying the information upon which the
search will be performed. The filter portion of
the search criteria provides a document filter
for determining which document will be in-
cluded in the search results. A compound scope
and filter may be formed by repeating portions
of the search criteria with the results of the
search saved for additional searching.

EP 0 435 804 A2

# A METHOD OF EXPANDING USER ACCESS TO A LIBRARY OF SHARED ELECTRONIC DOCUMENTS

## Field of the Invention

This invention relates to expanding user access to a library of shared electronic documents, and more particularly, to searching a shared library for previously stored documents.

## Background of the Invention

Electronic office systems frequently provide for the sharing of information through the use of data repositories called electronic libraries. These electronic (shared) libraries are capable of being accessed by users of common networks as well as users of networks of interconnected pieces of equipment and programs. A user (end user) may be any person, device, program, or computer system that utilizes the systems for information processing and information exchange. Along with the increase in the number of users storing and retrieving information from such libraries are the accompanying problems of locating information once it has been stored in a shared library. The problem of later locating a particular document is further exacerbated with a proliferation in the number of electronic libraries available to a particular user. Instead of a single common repository, users may have a plurality of these libraries accessible on a common or interconnected network. A SEARCH command is used to locate library information in these shared libraries based on selection conditions specified with the command. The SEARCH command provides search criteria used for locating particular documents. However, the command does not provide for specifying a particular library or searching information having a particular relationship with the information being searched.

Relationships between documents are particularly problematic for the SEARCH command. A document within an electronic library may be physically grouped with another document to form a folder document. Folders are documents which form hierarchical and linear relationships between a group of documents. Folders can be nested to form a hierarchical relationship whereby the group of documents within a folder is ordered to form a linear relationship. The documents within a folder are organized sequentially by a specified descriptor or by a specified position number. Access to the folder is independent of the documents contained therein. SEARCH commands do not provide access to folder documents and thus cannot facilitate searching for documents organized within the folder.

Consequently, what is needed is a technique for establishing which libraries to search along with an ability to detect and retrieve documents organized to form relationships with other documents in a shared library.

## Summary of the Invention

This invention relates to a method of searching objects in a shared library that meet a certain selection criteria. This invention provides a SEARCH command that allows specification of the libraries to be searched as well as the conditions to be used for selecting documents. The depth of the search can be specified along with filters for accessing documents grouped into relationships such as folders. This invention discloses a SEARCH command with scope and filter portions arranged to form a search criteria. The scope portion provides for the specification of libraries, search depths, and documents to be included in a search such as folders or lists. The filter portion provides for the selection of documents to be included as part of the results of the search. Each portion of the SEARCH command may be repeated to form a compound scope or filter.

## Brief Description of the Drawings

Figure 1 is a block diagram of a document interchange management system where this invention may be practiced.

Figure 2 is a basic document model created for each document filed in the library of the system shown in Figure 1.

Figure 3 is a document interchange SEARCH command with its available operands.

Figure 3A is a preferred response when the SEARCH command of Figure 3 is executed.

Figure 4 is the search selection criteria for the SEARCH command shown in Figure 3.

Figure 5 is the Backus Nauer Form for a filter used in selecting documents to be included as part of the results of a search.

Figure 6 specifies the predicates allowed for the SEARCH command shown in Figure 3.

## Detailed Description

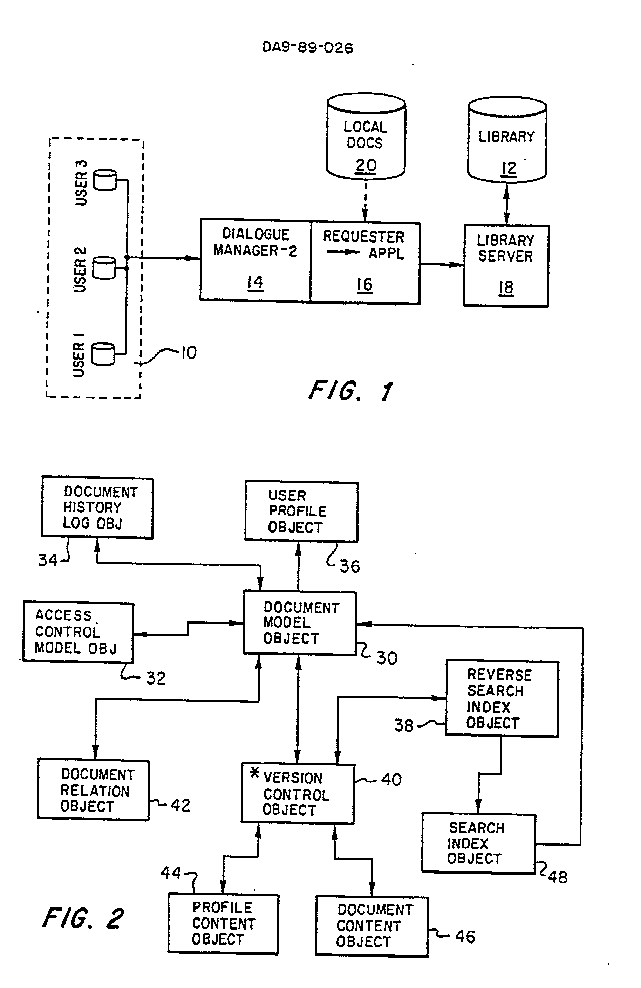

Figure 1 shows a document management system for exchanging documents stored in a shared library between the shared library and a plurality of end users. A plurality of end users 10 may store and retrieve documents in a shared library 12. A user (end user) may be any person, device, program, or computer system that utilizes the system for data processing or information exchange. One prior art structure for conveying any document, irrespective of its content, from one type of document management system to another is the Document Interchange Architecture (DIA).

DIA is a program-to-program communication architecture which defines the protocols and data structures, which when followed or used by programmers, enables programs to interchange information such as documents and messages in a consistent and predictable manner. DIA is independent of the type of information managed. DIA includes document objects which contain parameters or descriptors that describe the contents of the information being transmitted. The descriptors contained in the objects include the name under which the information is filed, the authors, the subject of the invention and the data the information was filed.

The library 12, when implemented using DIA structures, is capable of being accessed flexibility and simultaneously by a plurality of users and represents a common repository or shared resource. Unlike the shared library 12, a user's personal or private documents are stored in a local resource 20. This local storage resource 20 is usually not shared with other users and each user has dedicated space within the resource. Users may access this local storage 20 through the dialogue manager 14 and the requester application 16. The dialogue manager 14 and requester application 16 also interfaces with the library server 18 which controls a user's access to the shared library 12. When a user files a document in the library 12, the library server 18 constructs parameters or descriptors that describe the contents of the information being stored in the library.

Referring to Figure 2, a basic document model is shown for information stored in the library 12 as shown in Figure 1. This document model is created by the library server 18 and is stored with each document. While it is not necessary to implement the basic document model explicitly to support DIA library service architecture, there is the requirement that a design be mapped to these models, or to a subset of them. A brief description of each component of the basic document model will now be given.

The User Profile Object 36 (UPO) is not part of the DIA document model, but is instead an object referred to by the DIA document model. The User Profile Object 36 is created when the users represented are logged members of an Office System network. It identifies a user and contains information about the user such as aliases, services authorized to the user, default accounting information, and other user-specific information.

The Document Model Object 30 is the heart of the DIA document model and is logically the first object created when a document is filed for the first time in a document library. It contains information concerning ownership and attributes of a particular document. More specifically, it contains document instance attributes, such as whether the document is editable or not-editable ; the maximum number of versions ; and the action to be taken if the user has attempted to edit a document that cannot be edited. In addition, the Document Model Object 30 may contain any of the following information :

1) Document level locking information indicating the user who has checked a document out of the library for updating ;

2) Indications that a document contents has been removed from direct control of the library server ;

3) Directions to a library administrator to remove parts or restore parts of a document to library service control ;

4) Time and date information was removed from direct control of the library server ;

5) Location of information removed from direct control of the library server ; and

6) Optional information for archival purposes.

The Access Control Model Object 32 (ACMO) is created when a document is filed for the first time into a DIA library. The principle purpose of the Access Control Model Object 32 is to consolidate information to be used in determining non-owner access to the document. It contains access control information such as whether the document is capable of being accessed by any one (public), whether access is permitted to a limited number of explicitly specified users (private), or whether the information is shared with others. The Access Control Model Object 32 also contains information that governs the retention and disposal of the document.

The Document History Log Object 34 (DHLO) is optionally created when a document is filed in the library and the user wishes to record various activities on the document. For example, a user may wish to record the number of times the document was read and by whom.

The Document Relation Object 42 (DRO) is created when a document is first filed in the library. Its purpose is to describe the logical relationships between a document and other related or grouped documents. For example, the DIA architecture allows folder documents to be created that contain other documents. When such a relationship exists, then each document contained within the folder has a pointer entry called a Library Assigned Document Name (LADN) in the Document Relation Object 42.

The Version Control Object 42 (VCO) is created when a document is first filed into the library and contains information for several objects that may comprise a single named version of a document. It provides space for version naming, version level locks, and other version related level process controls.

The Profile Content Object 44 (PCO) is created when a document is first filed into the library and a user wishes to create sub-objects for performance or other reasons. The Profile Content Object 44 is the repository for Profile information related to the sub-objects.

The Document Content Object 46 (DCO) is created when a document is first filed into the library and provides storage for the document contents. In addition, the Document Content Object 46 provides storage for saving information concerning the actual size of the document in various units of measurement.

The Search Index Object 48 (SIO) contains entries used in searching within a document. The entries are placed in the SIO 48 as a result of the following sequence of actions on other objects. The basic Document Model Object 30 is first created as part of processing a FILE command. The Library Server then scans the Profile Content Object 44, the Document Relation Object 42, and the Access Control Model Object 32 to find terms to be used to support a parametric SEARCH. As each term is identified, an entry is made in the Search Index Object 48 whose name includes the parametric search term value and semantics. If no SIO 48 exists when the Library Server scans the aforementioned objects, one is created and the entries placed therein as if the SEARCH Index Object 48 always existed.

The Reverse Search Index Object 38 (RSIO) exists to support the removal of Search Index Object 48 entries when a document is removed from the library by a DELETE command. Entries for parametric search terms are placed in the RSIO 38 at the same time they are being made in the Search Index Object 48.

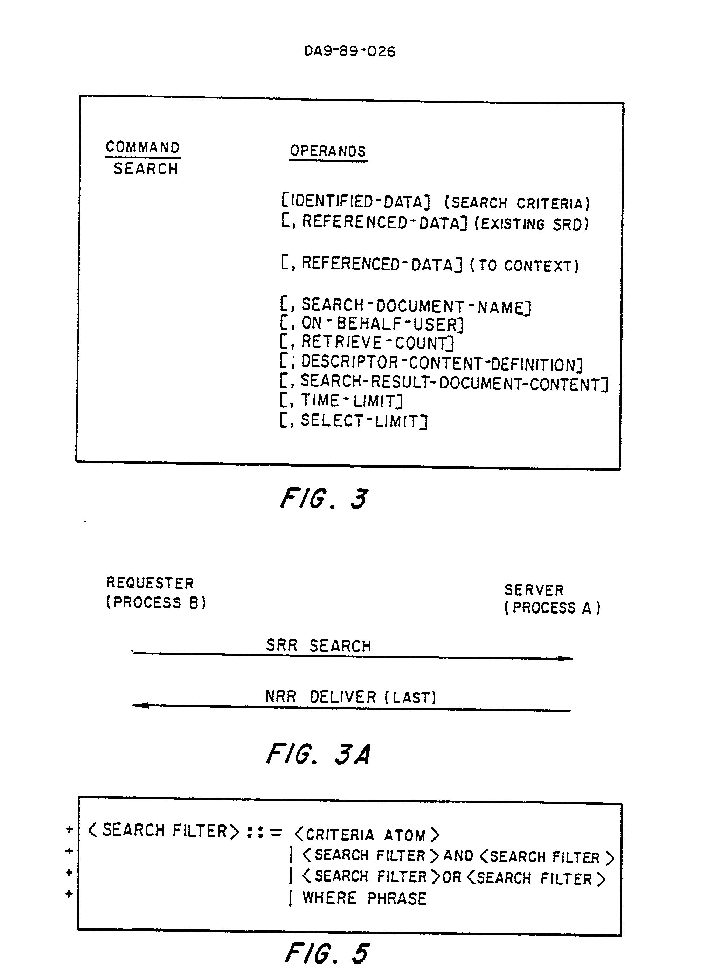

Turning to Figure 3, a SEARCH command is shown along with its available operands. This command is used to locate documents in the library 12 of Figure 1. Documents that satisfy a specified search criteria are returned to one of the users 10 making the search request. The search criteria may consist of combinations of DIA document profile parameters, document model object parameters, folders, and contextual search data. The search criteria may also be enterprise-specific search terms added to a document by an enterprise of related users, i.e., a bank. The input to the SEARCH command includes the libraries to be searched, the criteria used to qualify the document, the amount of time to spend searching, the maximum number of documents which may be selected, and what information to return for the documents selected. This invention is directed to the criteria used to qualify the documents for a search. Implied within the SEARCH command is support for DIA access rules. These rules as applied to the SEARCH command require that only those documents to which the requester (user) is authorized may be filtered with the search conditions specified.

The operands for the SEARCH command are shown in Figure 3 and will be briefly described. The IDENTIFIED-DATA operand identifies the document which contains the selection criteria used to qualify a document for inclusion in the results of the search. The identified document must have a document type of Search Criteria Document (SCD) or Search Result Document (SRD) and conform to their internal formats. The absence of this optional operand results in a search for all documents which the requester/user has access. This invention is directed toward this operand of the SEARCH command.

The REFERENCED-DATA operand identifies an existing document which will be updated with the results of the current search. This document must have a document type of Search Result Document (SRD) or an exception will be raised. This operand may optionally be supplied to identify a context (folder or stapler) into which the Search Result Document should be added.

The SEARCH-DOCUMENT-NAME operand is optional and specifies both the profile GCID and the document name value of the Search Result Document to be created or updated by the SEARCH process. If this operand is missing, no Search Result Document (SRD) will be created.

The ON-BEHALF-USER operand is optional and identifies the user on whose behalf the SEARCH is to be done. The search is performed as if the ON-BEHALF-USER user was the command requester. If a Search Result Document is created, the ON-BEHALF-USER is the owner of the new document.

The RETRIEVE-COUNT operand, when present and indicating a value greater than zero, specifies the maximum number of document descriptors that will be returned. A RETRIEVE-COUNT of zero specifies that the requestor/user only wants the document type sub-profile for the Search Result Document. In such a case, the total number of documents or document descriptors are returned instead of the actual documents or document descriptors.

The DESCRIPTOR-CONTENT-DEFINITION operand specifies the content of the Document Descriptor Document (DDD) delivered as part of the reply to the SEARCH command. If the operand is omitted, the LADN and optionally the library name will be stored.

The TIME-LIMIT operand is optional and if present specifies the maximum number of minutes (from 1 to 1440) that the command server should allow the search process to execute. If this operand is omitted, the search will run until each document within the specified scope is examined.

The SELECT-LIMIT operand is optional and if present specifies the maximum number of documents that the requestor/user wants the command server to allow during the search process. If this operand is missing, the maximum number of documents is determined by the command server.

With particular reference to Figure 3A, there is shown the preferred response when the SEARCH command is successfully executed. At the normal conclusion of a search, a reply will be delivered to the requester by a DELIVER command. If the SEARCH command terminates abnormally, a reply will sent via the ACKNOWLEDGE command along with an exception condition.

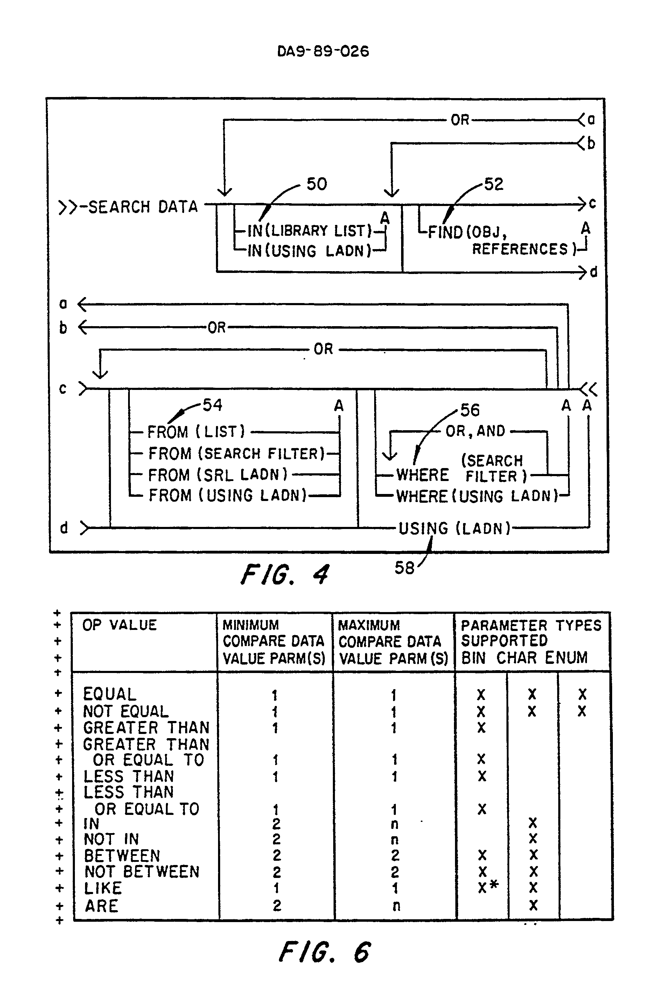

Turning to Figure 4, the scope and filter portions of the SEARCH command are illustrated. A search scope is set by specifying the set of libraries, the documents within the libraries, and the depth within a folders to examine when documents are contained within the folder.

The IN phrase 50 allows a user to specify the libraries (library scope) to be searched. The SEARCH command uses the IN phrase 50 to identify the libraries which contain the documents that are to be filtered with the search filter. When multiple libraries are specified, the results of the combined search will be stored at the library associated with the library server executing the SEARCH command. The library server is also responsible for the coordination of the SEARCH command with the other libraries specified. It is not a requirement that the library server search its own library when executing the SEARCH command. In the absence of a library scope, the library associated with the library server processing the SEARCH command is the default.

The FIND phrase 52 specifies the depth of the search. A user is allowed to specify whether the objects identified in the FROM phrase are to be searched. More importantly, the FIND phrase specifies the depth to which the objects related to the identified objects are to be searched. This is especially significant when the specified object is a folder document containing a number of related document. In the absence of a search depth, only the documents within the search scope are filtered to the "direct references" or identified objects.

The FROM phrase 54 allows the specification of a folder, a Search Result Document (SRD), or a list of documents to which to apply the filter. When the FROM phrase specifies a list of documents, this list may be specified as a list of Library Assigned Document Names (LADNs) or as a stored list in a Search Result Document's (SRD) search result section. The SEARCH command will only apply the search filter to those documents contained within the scope indicated by the list. In the absence of a document scope, all documents that the user has at least read access to will be included in the search.

The WHERE phrase 56 specifies the document filter which selects a document for inclusion in the search results. The simplest element of the WHERE phrase 56 is a criteria atom. This invention supports both parametric search criteria atoms and contextual search criteria atoms. A parametric search criteria atom is specified as a predicate, object identifier, and one or more parameter identifiers with data. Where the parameter identifier requires a GCID for character set code page identification, this information is also contained within the search information. A parametric search criteria atom may be used as a filter for semantic parameters contained within the various document model objects. For example, returning to Figure 2, a parametric search criteria atom may be used to access semantic parameters in the Document Model Object 30 (DMO), Access Control Model Object 32 (ACMO), Document Relation Object 42 (DRO) or Profile Content Object 44 (PCO). If data is specified with the parameter identifier, it is compared to the data in the selected document model objects using the predicate specified. Therefore, the SEARCH command supports the specification of parameters and parameter fields which have semantic meaning.

Referring again to Figure 4, each of the search criteria phrases may be repeated to form a compound scope or filtering phrase. For example, the IN 50, FIND 52, and FROM phrases 54 may be joined with the OR predicate to form a compound phrase. Likewise, the WHERE phrase 56 may be joined with either the AND or OR predicates to form a compound phrase. Whenever a compound combination is formed using the AND and OR predicates, the AND predicate takes precedence and is executed before the OR predicate.

Turning to Figure 6, the predicates allowed for different data types in a parametric search criteria atom are shown. The parameter types supported include binary (BIN), character (CHAR) and enumerated (ENUM). While most of the predicates values are self explanatory, a few require elaboration. The IN predicate allows documents to be selected for inclusion in the Search Result Document if the value of the parameter specified has at least one of the values provided. This allows the parameter to be compared to a list of values.

The NOT IN predicate means that the documents will be selected that have a value for the parameter that is not in the list specified. For example, listing all the documents a user had access to whose owner was not Smith, Adams, or Jones could be specified as OWNER, not in, (_Smith', _Jones'_Adams').

The BETWEEN predicate allows documents to be selected for inclusion in the Search Result Document if a parameter falls within a certain range. For example, a user may want to select those documents whose date falls within the range starting at June 1 st through July 31 st. The semantics of between are that the parameter is greater than or equal to the first value and less than or equal to the second value. The NOT BETWEEN predicate allows documents to be selected for inclusion in the Search Result Document if a parameter falls outside of the range of values. For example, you may want to select those documents whose date is not between June 1 st through July 31 st. The semantics of not between are that the parameter is less than the first value or greater than the second value.

The LIKE parameter allows documents to be selected that contain certain combinations of characters in the specified parameters. The LIKE predicate uses two characters to mean special things. These characters are self defining within the parametric search atom and are called the PS mask character and the wild card character. The PS mask character represents any string of zero or more characters. The PS mask character is placed before and/or after the combination of characters that a user wish to use for the search. If the PS mask character were defined to be the % character, for example, LIKE xyz% would select documents whose parameter value started with xyz. The wild card character represents a single character position and tells the search process not to analyze the character in that position. If the wild card character were defined to be the underscore character for example, LIKE x_z would select documents whose parameter value had an x as the first character and a z as the third character.

The ARE predicate allows the selection of documents which have multiple values in the parameters being searched. For example, a search for a document authored by Jones and Smith would be specified as "AUTHOR, ARE, Jones, Smith". The parametric search process would only select documents whose authors are at least both Jones AND Smith.

Referring again to Figure 4, criteria atoms may be combined to form more complex filters. When complex filters are created using a combination of the AND and OR predicates, the AND predicate is executed before the OR predicate. In addition, the WHERE phrases 56 may be nested within themselves to further specify a filter. In the absence of a search filer, all document contained within the search scope will be selected.

With particular reference to Figure 5, the Backus Nauer Form (BNF) for the WHERE phrase 56 is shown. As indicated, a search filter may consist of a criteria atom along with various combinations of search filters or the WHERE phrase 56.

The contextual search criteria atom is different from the parametric search criteria atom in that it uses an index which is derived from information contained in the document context.

In summary, this invention provides a method of searching a plurality of shared libraries which include lists of documents that may be arranged in document relationships such as folders. A search criteria is provided having a scope and filter portion. The scope portion consists of IN, FIND, and FROM phrases. The filter portion consists of a WHERE phrase. The IN phrase allows for the specification of the libraries to be searched. The FIND phrase specifies the depth of the search being requested, and the FROM phrase allows for the specification of document relationships such as a folder, Search Result Document (SRD), or a list of document to which the filter should be applied. The WHERE phrase specifies the document filter. Each of the phrases may be repeated to form a compound scope and filter phrase. In addition, the IN, FIND, and FROM phrases may be joined with the OR predicate to form a compound scope. Finally, the WHERE phrase may be joined with either the AND or OR predicates to form a compound filter. The disclosed search criteria permits a search to be used to locate library objects based on selection conditions specified in the SEARCH command.

While the invention has been particularly shown and described with reference to preferred embodiments thereof, it will be understood by those skilled in the art that various changes in form and details may be made therein without departing from the spirit and scope of the invention.

## Claims

1. A method of forming a search criteria for locating a library object stored in one of a plurality of shared libraries, said method comprising the steps of :

   specifying at least one of said plurality of libraries where said library object might be stored ; and

   specifying a depth of search for said library object within said one of said plurality of libraries.

2. A method of forming a search criteria according to claim 1 further including the step of repeating each of said specifying steps to form a compound search criteria.

3. A method of forming a search criteria according to laim 1 further including the step of joining each of said specifying steps with a predicate to form a compound search criteria.

4. A method of forming a search criteria according to claim 1 further including the step of specifying a search filter for locating said library object in at least one of said libraries.

5. A method of searching a plurality of shared libraries for a data object stored therein, said data object capable of existing in a grouped relationship including a folder, said method comprising the steps of :

   specifying at least one of said plurality of shared libraries where said data object may be stored ; and

   specifying said folder as a target of a search in at least one of said plurality of shared libraries ;

specifying a depth of said search for said target in at least one of said plurality of shared libraries ; and

executing said search in at least one of said plurality of shared libraries for said target.

DA9-89-026

FIG. 1

FIG. 2

DA9-89-026

```
COMMAND                    OPERANDS
SEARCH


            [IDENTIFIED-DATA] (SEARCH CRITERIA)
            [, REFERENCED-DATA] (EXISTING SRD)

            [, REFERENCED-DATA] (TO CONTEXT)

            [, SEARCH-DOCUMENT-NAME]
            [, ON-BEHALF-USER]
            [, RETRIEVE-COUNT]
            [; DESCRIPTOR-CONTENT-DEFINITION]
            [, SEARCH-RESULT-DOCUMENT-CONTENT]
            [, TIME-LIMIT]
            [, SELECT-LIMIT]
```

## FIG. 3

REQUESTER                                   SERVER
(PROCESS B)                                 (PROCESS A)

SRR SEARCH
————————————————————————————————————————————————→

←————————————————————————————————————————————————
NRR DELIVER (LAST)

## FIG. 3A

```
<SEARCH FILTER> ::= <CRITERIA ATOM>
                  | <SEARCH FILTER> AND <SEARCH FILTER>
                  | <SEARCH FILTER> OR <SEARCH FILTER>
                  | WHERE PHRASE
```

## FIG. 5

DA9-89-026

FIG. 4

| OP VALUE | MINIMUM COMPARE DATA VALUE PARM(S) | MAXIMUM COMPARE DATA VALUE PARM(S) | PARAMETER TYPES SUPPORTED BIN | CHAR | ENUM |
|---|---|---|---|---|---|
| EQUAL | 1 | 1 | X | X | X |
| NOT EQUAL | 1 | 1 | X | X | X |
| GREATER THAN | 1 | 1 | X | | |
| GREATER THAN OR EQUAL TO | 1 | 1 | X | | |
| LESS THAN | 1 | 1 | X | | |
| LESS THAN OR EQUAL TO | 1 | 1 | X | | |
| IN | 2 | n | | X | |
| NOT IN | 2 | n | | X | |
| BETWEEN | 2 | 2 | X | X | |
| NOT BETWEEN | 2 | 2 | X | X | |
| LIKE | 1 | 1 | X* | X | |
| ARE | 2 | n | | X | |

FIG. 6